Europäisches Patentamt

European Patent Office

Office européen des brevets

(19)

(11) Veröffentlichungsnummer: **0 109 098**
**B1**

(12) # EUROPÄISCHE PATENTSCHRIFT

(45) Veröffentlichungstag der Patentschrift:
20.04.88

(21) Anmeldenummer: **83201204.1**

(22) Anmeldetag: **19.08.83**

(51) Int. Cl.⁴: **C 10 L 9/10**, C 10 B 53/00

(54) **Die Bindung von Schadstoffen bei der Herstellung von Brikett aus organischen Produkten oder Abfallprodukten und die katalytische Reformierung von Pyrolysaten dieser Brennstoffe.**

(30) Priorität: 21.08.82 DE 3231153
21.08.82 DE 3231203
29.11.82 DE 3244146

(43) Veröffentlichungstag der Anmeldung:
23.05.84 Patentblatt 84/21

(45) Bekanntmachung des Hinweises auf die Patenterteilung:
20.04.88 Patentblatt 88/16

(84) Benannte Vertragsstaaten:
AT BE CH FR GB IT LI LU NL SE

(56) Entgegenhaltungen:
DE - A - 2 436 290
DE - A - 3 040 227
FR - A - 1 181 371
US - A - 4 226 601

(73) Patentinhaber: **Lindemann, Rolf W., Birkenhügel 6,
D-2863 Ritterhude (DE)**

(72) Erfinder: **Lindemann, Rolf W., Birkenhügel 6,
D-2863 Ritterhude (DE)**
Erfinder: **Schrübbers, Hans, Dr., Hackfeldstrasse 60,
D-2800 Bremen 1 (DE)**
Erfinder: **Schulz-Ekloff, Günter, Professor Dr.,
Klepperhof 20, D-2804 Lilienthal (DE)**

(74) Vertreter: **Bruse, Willy Hans Heinrich, Edisonstrasse 14,
D-2800 Bremen 33 (DE)**

**Beschreibung**

Die Erfindung betrifft ein Verfahren nach dem Oberbegriff des Patentanspruches 1.

Durch die Anwendung eines solchen Verfahrens soll bei der Herstellung von Brikett beliebiger Formgebung aus Müll, Klärschlamm und anderen organischen Stoffen oder Abfallprodukten eine Bindung der in den Produkten enthaltenen Schadstoffe, wie Chlor, Schwefel, Fluorid, Phosphat, Schwermetalle und dergleichen erfolgen.

Für die universelle Verwendung solcher Brikett aus Müll für den Hausbrand, für Industriefeuerungen, zur Generator- und Synthesegaserzeugung, zur Erzeugung von Methan oder Öl und dergleichen, ist neben der Einstellung eines konstanten Heizwertes vor allem die Gewährleistung niedriger Schadstoffemissionen von grundsätzlicher Bedeutung. Eine feste Bindung der vorhandenen Schadstoffe in den Rückständen ist somit unerlässlich notwendig.

Bei der Herstellung von Brikett aus Müll und/oder Biomasse findet bisher keine gezielte Schadstoffbindung statt. Eine Entwicklung gemäss Forschungsbericht T79-102 BMFT, VDI-Nachrichten 31, vom 30./31. 07. 1982 führt zu einem Brikett mit einem Chlorgehalt von 0,2 bis 0,6% und einem Schwefelgehalt von 0,2 bis 0,45%. Bei dem hiernach bekannten Verfahren werden die anorganischen Bestandteile des Mülls soweit wie möglich abgetrennt.

Bekannt ist auch die Pyrolyse von festen Brennstoffen und organischen Abfällen, z.B. Hausmüll, die entweder als Niedrigtemperatur-Pyrolyse oder als Hochtemperatur-Pyrolyse durchgeführt wird, wie es K.J. Thome und Kozniensky in «Recycling International», Freytag-Verlag, Berlin, 1982, und K. Fichtel in «Umwelt» 4, 42, 1975, unter Hinweis auf Demonstrationsanlagen in den USA beschreiben. Der Entwicklungsstand der Hausmüllpyrolyse wird in «Müll & Abfall» 7/82, 176ff, und in «Stuttgarter Berichte zur Abfallwirtschaft», Bd. 5, Bielefeld, 1977, erläutert.

Die Pyrolyseprodukte der Niedrigtemperatur-Pyrolyse bestehen aus einer Vielzahl verschiedener Kohlenwasserstoffe, d.h. aus einem sehr breiten Produktspektrum. Die Pyrolyseprodukte solcher nach bekannten Verfahren hergestellter Brikett sind ohne weitere Verarbeitung bisher keine marktfähigen Erzeugnisse. Eine Reformierung, eine Aromatisierung oder andere Arten der Aufbereitung sind daher erforderlich. Bei allen bekannten Verfahren wird dementsprechend ein zweiter Verfahrensschritt an die Pyrolyse angeschlossen, um die Pyrolyseprodukte technisch verwenden zu können. Es wird entweder die Reformierung des Pyrolyseöls, die Herstellung von Brenngas oder die vollständige Verbrennung der Pyrolyseprodukte zur Wärmegewinnung bzw. eine andere Zwischenstufenbehandlung angeschlossen.

Die relativ hohen Werte von Schwefel und vor allem von Chlor erhöhen drastisch die Kesselkorrosion und verlangen zur Reinhaltung der Luft in der Regel Rauchgaswäscher. Bei so hohen Konzentrationen ist es weiterhin nicht möglich, zusätzlich Sondermüll zur Herstellung der Brikett zu verwenden ohne die Grenzwerte der gesetzlichen Vorschriften über maximal zulässige Emissionswerte zu überschreiten. Bei den relativ hohen Schwermetallanteilen im Müll, vor allem im Klärschlamm und in speziellen Industrieabfällen, ist es notwendig, diese Substanzen soweit wie möglich wasserunlöslich in den Rückständen, d.h. zum Beispiel in der Asche oder im Pyrolysekoks, zu binden. Alle bekannten Pyrolyseverfahren sind daher Mehrstufenverfahren und liefern bei der Ölherstellung sehr breite Produktspektren mit einem sehr geringen Anteil an aromatischen Kohlenwasserstoffen.

Der Erfindung liegt die Aufgabe zugrunde, bei der Herstellung von Brikett aus organischen Produkten oder Abfallprodukten eine chemische Bindung vorhandener Schadstoffe zu erreichen und dadurch die Emission von Schadstoffen und die Auslaugbarkeit von Schwermetallsalzen aus den Rückständen zu minimieren. Dabei wird ein Verfahren zur Veredelung üblicher Pyrolyseprodukte zu marktfähigen Erzeugnissen in einem Verfahrensschritt angestrebt, vor allem die Herstellung von Synthesegas, Benzin, Diesel, Rohstoffe für die chemische Industrie, insbesondere aromatische Kohlenwasserstoffe bis $C_{10}$.

Die Aufgabe der Schadstoffbindung wird bei dem erfindungsgemässen Verfahren dadurch gelöst, dass den Produkten alle folgenden anorganischen Verbindungen zugegeben werden: CaO, MgO, $MgCO_3$, Silikate und $Al_2O_3$, dass die Produkte mit diesen Zugaben einem Pressdruck von mehr als 1000 bar ausgesetzt und dabei durch innere Reibung sowie zusätzlicher exothermer Erwärmung auf eine Temperatur über 100 Grad Celsius erwärmt werden, bei der chemische Reaktionen der Zugaben initiiert werden und beschleunigt ablaufen und ausserdem dadurch, dass durch die Zugabe mehrerer saurer mineralischer Katalysatoren die nachfolgende Pyrolyse der Brikett sowie die Reformierung der Pyrolysate in Anwesenheit von Wasserstoff in einem Verfahrensschritt erfolgt.

Dadurch wird erreicht, dass eine Vielzahl chemischer Reaktionen unter Ausnutzung exothermer Reaktionswärme und unter hohem Druck initiiert werden. Durch die Zugabe der genannten anorganischen Verbindungen findet eine chemische Bindung von Schadstoffen beim Pressvorgang und bei der Pyrolyse bzw. Verbrennung zu schwerlöslichen Mineralien, Mischoxiden und natürlichen bzw. technischen Silikaten statt, und zwar

– durch Bildung von natürlich vorkommenden Mineralien und Salzen $CaSO_4$, $MgSO_4$, $CaCl_2$, $CaF_2$, Ca-Phosphate,

– durch Bildung von Mischoxiden des Ca, Mg, Al mit Oxiden bzw. Salzen anderer Metalle, wie Ni, Co, Fe, Pb, Cd,

– durch Silikatbildung mit Metallsalzen von Fe-, Mn-, Sn-, Cr-, Co-, Ba-, Zn-, Ni-, Pb-, Ti-, Be-, Li-, Cd-Salzen

zu schwerlöslichen, natürlich vorkommenden und technischen Silikaten. Die Reformierung der Pyrolyse erfolgt durch die dem zu pyrolysierenden Brennstoff zugegebenen sauren mineralischen Katalysatoren. Der für die Reformierung notwendige Wasserstoff ist entweder in den Ausgangsprodukten, z.B. den organischen Abfällen, enthalten oder wird extern, z.B. durch Wasserdampf, zugeführt. Für die Herstellung hoher Anteile aromatischer Kohlenwasserstoffe müssen die Katalysatoren neben einer hohen Acidität ein enges definiertes Hohlraumsystem aufweisen, z.B. ein Kanalsystem, wie es bei verschiedenen Zeolith-Katalysatoren gegeben ist. Diese Eigenschaften können beide in einem Katalysator gemeinsam vorhanden sein, wie z.B. bei ZSM5, oder durch physikalische Mischung zweier oder mehrerer Komponenten, z.B. Modernit und Silicalite aus der Gruppe der Zeolithe, oder durch räumlich getrennte Anordnung der einzelnen Komponenten in einem Reaktionsraum realisiert werden. Dabei können der Reformierungskatalysator sowie die Einkomponenten- und Mehrkomponenten-Katalysatoren direkt bei der Herstellung eines festen Brennstoffes dazu gemischt werden. Dies erfolgt bei der Brikettherstellung direkt bei der Pressung der Brikett. Ebenso sind homogene Mischungen von Katalysator und Brennstoff sowie eine separate Anordnung von Katalysator und Brennstoff in einem Reaktionsraum möglich. Dabei findet die Reformierung im Temperaturbereich von 280–800 Grad Celsius oder auch höher und bei Drucken von 400 Torr bis 10 bar und mehr statt. Die Ausbeute an Gas liegt je nach dem Ausgangsprodukt, nach Katalysatorwahl und Reaktionsbedingungen zwischen 10 und 100%, während die Ausbeute an Aromaten je nach Ausgangsprodukt, Katalysator und Reaktionsbedingungen zwischen einem Anteil von 30–70 Gew.-% der gebildeten Kohlenwasserstoffe insgesamt schwankt, wobei zwischen 90 und 99,9% im Bereiche von $C_6$–$C_{10}$-Aromaten liegen.

Der besondere wirtschaftliche Wert der Erfindung liegt einmal darin begründet, dass nach diesem Verfahren verarbeiteter Müll, Klärschlamm oder industrieller Sondermüll einer thermischen Behandlung ohne zusätzliche Rauchgasreinigung zugeführt werden kann. Dadurch werden hohe Investitionskosten und hohe Betriebskosten für die Rauchgasreinigung eingespart. Aufgrund der vorliegenden Bindung der Schwermetalle in den Rückständen sind diese vielseitig verwendbar bzw. gefahrlos lagerfähig. Zum anderen liegen die mit der Erfindung erzielten Vorteile insbesondere darin, dass die Pyrolyse fester Brennstoffe und organischer Abfälle gekoppelt und mit der Reformierung der Pyrolysate bzw. der Herstellung aromatischer Kohlenwasserstoffe in hohen Konzentrationen aus den Pyrolysaten in einem Verfahrensschritt zu einem engen Produktionsspektrum und somit zu marktfähigen Produkten führt, wobei verschiedene gasförmige und flüssige Energieträger, Rohstoffe für die chemische Industrie und andere Aromate des $C_6$–$C_{10}$-Bereichs anfallen. Der wirtschaftliche Vorteil liegt in der hohen Selektivität der Verfahren mit bis zu 70 Gew.-% $C_6$–$C_{10}$-Aromaten und bei den durch das Einstufungsverfahren geringeren Anlagen- und Energiekosten.

Zum besseren Verständnis der Erfindung werden nachstehend einige Ausführungsbeispiele erläutert:

Beispiel 1:
Briketts aus Hausmüll, Klärschlamm und Kohle nach beschriebenem Verfahren zur Schadstoffbindung hergestellt, werden – bei geeigneter Anordnung eines modifizierten X-Zeolithen im Reaktionsraum – bei 450 Grad Celsius pyrolysiert. Dabei entstehen zu etwa 30 Gew.-% Brenngase (SNG) und zu etwa 70 Gew.-% Öl; der Teeranteil liegt unter 2 Gew.-%.

Beispiel 2:
Brikett nach Beispiel 1 werden bei geeigneter Anordnung eines modifizierten Y-Zeolithen im Reaktionsraum und unter Zugabe von 5–10 Gew.-% Wasserdampf bei 550 Grad Celsius pyrolysiert. Der Anteil an erhaltenen Brenngasen liegt bei gut 95 Gew.-%, der Teeranteil bei weniger als 0,5 Gew.-%.

Beispiel 3:
Gewöhnlicher Hausmüll wird unter homogener Vermischung mit ZSM-5-Katalysatoren bei 450 Grad Celsius und Normaldruck pyrolysiert. Dabei werden 45 Gew.-% Aromate im Bereich $C_6$–$C_{10}$ gebildet und 0,3 Gew.-% von $C_{11}$-Aromaten.

Beispiel 4:
Durch separate Anordnung des Katalysators kann für die Aromatisierung eine niedrigere Temperatur als für die Pyrolyse eingestellt werden. Bei einer Mischung von Hausmüll und 20% getrocknetem Klärschlamm erhält man bei einer Pyrolysetemperatur von 450 Grad Celsius, einer Temperatur von 380 Grad Celsius am Katalysatorbett, einen Druck von 3 bar und unter Verwendung eines Mischkatalysators aus Modernit und Silicalit, getrennt vom Pyrolysegut angeordnet, 39,5% Aromaten im Bereich $C_6$–$C_{10}$ und 0,7% im Bereich $C_{11+}$.

Beispiel 5:
Bei Einsatz eines Hartbrennstoffs, gepresst aus geschreddertem Müll, Klärschlamm, 10% Kohle und Modernit sowie einer getrennten Katalysatorschicht aus ZSM-5 im Reaktionsraum erhält man bei einer Pyrolysetemperatur von 450 Grad Celsius, einer Temperatur von 320 Grad Celsius am Katalysatorbett und bei einem Druck von 5 bar 65,3% Aromaten im Bereich $C_6$–$C_{10}$ und 4,4% Aromaten im Bereich $C_{11+}$.

**Patentansprüche**

1. Verfahren zur Bindung von Schadstoffen bei der Herstellung von Brikett aus organischen Produkten oder Abfallprodukten und die katalytische Reformierung von Pyrolysaten dieser Brikett, dadurch gekennzeichnet,

– dass den Produkten alle folgenden anorganischen Verbindungen zugegeben werden: CaO, MgO, MgCO₃, Silikate und Al₂O₃,

– dass die Produkte mit diesen Zugaben einem Pressdruck von mehr als 1000 bar ausgesetzt und

– dabei durch innere Reibung sowie zusätzlicher exothermer Erwärmung auf eine Temperatur über 100 Grad Celsius erwärmt werden, bei der chemische Reaktionen der Zugaben initiiert werden und beschleunigt ablaufen und

– dass durch die Zugabe mehrerer saurer mineralischer Katalysatoren die nachfolgende Pyrolyse der Brikett sowie die Reformierung der Pyrolysate in Anwesenheit von Wasserstoff in einem Verfahrensschritt erfolgt.

2. Verfahren nach Anspruch 1, dadurch gekennzeichnet, dass der zur Reformierung notwendige Wasserstoff durch externe Zugabe angereichert wird.

3. Verfahren nach den Ansprüchen 1 und 2, dadurch gekennzeichnet, dass die Pyrolyse und die Bildung der aromatischen Kohlenwasserstoffe im Pyrolysat durch Zugabe saurer, shape selektiver Katalysatoren in einem Verfahrensschritt durchgeführt werden.

4. Verfahren nach den Ansprüchen 1 bis 3, dadurch gekennzeichnet, dass die Katalysatoren bei der Herstellung des festen Brennstoffs zugegeben und mit dem Brennstoff homogen vermischt werden.

5. Verfahren nach den Ansprüchen 1 bis 3, dadurch gekennzeichnet, dass die Katalysatoren separat vom Brennstoff in einem Reaktionsraum zugegeben werden.

6. Verfahren nach den Ansprüchen 1 bis 5, dadurch gekennzeichnet, dass ein Katalysator mit der notwendigen Acidität und shape-Selektivität aus einer Mischung mehrerer Komponenten besteht.

7. Verfahren nach Anspruch 6, dadurch gekennzeichnet, dass eine Komponente des Katalysators ein Modernit und eine weitere Komponente ein Silicalit ist.

8. Verfahren nach Anspruch 7, dadurch gekennzeichnet, dass die zweite Komponente ein Hohlraumsystem geeigneter Grösse aufweist, um die bei der Pyrolyse gebildeten Kohlenwasserstoffe im Hohlraumsystem zu aromatisieren, jedoch eine Kondensation von Aromaten nicht zulassen.

9. Verfahren nach Anspruch 5, dadurch gekennzeichnet, dass die einzelnen Komponenten des Katalysators räumlich getrennt voneinander im Reaktionsraum vorgesehen sind.

## Claims

1. Process for binding of harmful materials in the production of briquettes of organic products or waste products and the catalytic reforming of pyrolysates of these briquettes, characterized in that to the products are added all the following inorganic compounds
CaO, MgO, MgCO₃, Silicates and Al₂O₃
the products with these additives are subjected to a compression pressure of more than 1000 bar and

thereby through internal friction and additional exothermic heating are heated to a temperature above 100 degrees Celsius, at which the chemical reactions of the additives are initiated and proceed in an accelerated manner and

through the addition of some acidic mineral catalysts the subsequent pyrolysis of the briquette as well as the reforming of the pyrolysate in the presence of hydrogen takes place in one process step.

2. Process according to claim 1, characterized in that the hydrogen required for the reforming is supplemented by external supply.

3. Process according to claims 1 and 2, characterized in that the pyrolysis and the formation of aromatic hydrocarbons in the pyrolysate are carried out in one process step through the addition of acidic shape-selective catalysts.

4. Process according to claims 1 to 3, characterized in that the catalysts are added in the production of the solid fuel and are homogeneously mixed with the fuel.

5. Process according to claims 1 to 3, characterized in that the catalysts are added separately from the solid fuel in a reaction zone.

6. Process according to claims 1 to 5, characterized in that a catalyst with the necessary acidity and shape-selectivity consists of a mixture of several components.

7. Process according to claim 6, characterized in that one component of the catalyst is a Modernite and a further component is a Silicalite.

8. Process according to claim 7, characterized in that the second component has a pore structure of suitable dimensions to make the hydrocarbons formed in the pyrolysis aromatic but not to permit condensation of the aromatics.

9. Process according to claim 5, characterized in that the individual components of the catalyst are spatially separated from one another in the reaction zone.

## Revendications

1. Procédé pour la fixation de substances nocives lors de la production de briquettes à partir de produits et de déchets organiques, et pour la réformation des produits de pyrolyse de ces briquettes, caractérisé en ce que:

– on ajoute aux produits tous les composés inorganiques suivants: CaO, MgO, MgCO₃, des silicates et Al₂O₃,

– on soumet les produits avec ces additifs à une pression supérieure à 1000 bars, et

– on chauffe par friction interne et chauffage exothermique supplémentaire à une température supérieure à 100 °C, pour initier et accélérer les réactions chimiques des additifs, et

– on procède en un seul stade opératoire à la pyrolyse des briquettes après addition de plusieurs catalyseurs minéraux acides, et à la réformation des produits de pyrolyse en présence d'hydrogène.

2. Procédé selon la revendication 1, caractérisé en ce que l'hydrogène nécessaire pour la réformation est enrichi par une addition externe.

3. Procédé selon l'une des revendications 1 et 2, caractérisé en ce que la pyrolyse et la formation des hydrocarbures aromatiques dans le produit de pyrolyse sont effectués en un seul stade opératoire par addition de catalyseurs acides, très sélectifs quant à la forme.

4. Procédé selon l'une quelconque des revendications 1 à 3, caractérisé en ce que les catalyseurs sont ajoutés pour la production du combustible solide et mélangés de manière homogène avec le combustible.

5. Procédé selon l'une quelconque des revendications 1 à 3, caractérisé en ce que les catalyseurs sont ajoutés séparément du combustible dans un espace réactionnel.

6. Procédé selon l'une quelconque des revendications 1 à 5, caractérisé en ce qu'un catalyseur avec l'acidité et la sélectivité de formes nécessaires consiste en un mélange de plusieurs constituants.

7. Procédé selon la revendication 6, caractérisé en ce qu'un constituant du catalyseur est une mordenite et un autre constituant est une silicalite.

8. Procédé selon la revendication 7, caractérisé en ce que le second constituant présente un système de cavités de dimension appropriée pour aromatiser dans le système de cavités les hydrocarbures formés pendant la pyrolyse, mais empêcher une condensation des hydrocarbures aromatiques.

9. Procédé selon la revendication 5, caractérisé en ce que les différents constituants du catalyseur sont spatialement séparés les uns des autres dans l'espace réactionnel.